Europäisches Patentamt

(19) European Patent Office

Office européen des brevets

(11) Publication number: **0 276 149**
**A2**

(12) **EUROPEAN PATENT APPLICATION**

(21) Application number: **88300473.1**

(22) Date of filing: **20.01.88**

(51) Int. Cl.⁴: **C 04 B 35/58**

(30) Priority: **20.01.87 US 5475**

(43) Date of publication of application:
**27.07.88 Bulletin 88/30**

(84) Designated Contracting States:
**DE FR GB IT NL SE**

(71) Applicant: **KERAMONT ADVANCED CERAMIC
PRODUCTS CORPORATION
4233 S. Fremont Avenue
Tucson Arizona 85714 (US)**

(72) Inventor: **Cox, Carl V.
1509 S. Burning Tree
Tucson Arizona 85710 (US)**

**Loutfy, Raouf O.
4660 N. Via Madre
Tucson Arizona 85749 (US)**

**Callahan, Mary
550 N. Pantano 212
Tucson Arizona 85710 (US)**

(74) Representative: **Whalley, Kevin
MARKS & CLERK 57/60 Lincoln's Inn Fields
London WC2A 3LS (GB)**

(54) **Process for preparing sintered aluminium nitride bodies.**

(57) A process for preparing aluminium nitride sintered bodies comprising starting with an aluminium nitride powder having the following characteristics: surface area not less than 2.5 m²/g: consisting of at least 95% by weight of aluminium nitride, wherein the bound oxygen content is at most 3% by weight, the total amount of metal or metal compound impurities being at most 0.6% by weight, and the silicon or carbon or compounds thereof being at most 0.5% by weight: homogeneously mixing said aluminium nitride with a sintering aid: then compacting the obtained mixture to form a body: and sintering the body with the following cycle: ramp temperature from room temperature to sintering temperature of at most 250°C per hour: sintering temperature from 1600 to 1900°C for at least 3 hours: and cooling the sintered body at a rate not more than 300°C/hr. The sintered bodies thus obtained have high thermal conductivity and good consistency.

EP 0 276 149 A2

## Description

### "PROCESS FOR PREPARING SINTERED ALUMINIUM NITRIDE BODIES"

This invention relates to a process for preparing sintered aluminium nitrade bodies.

The present invention relates in particular to a sintered aluminium nitride body having high thermal conductivity, suitable for substrates for integrated circuits and other electrical devices.

More particularly the invention refers to aluminium nitride sintered bodies having good consistency, i.e. uniform colour, uniform physical properties, for example mechanical properties such as flexural strength, excellent sintered density and uniform shrinkage.

It is well known in the art to use sintered aluminium nitride for insulating substrates since sintered aluminium nitride exhibits a satisfactory thermal conductivity.

There are knon many methods for preparing aluminium nitride powder which can then be used for preparing sintered bodies with good thermal conductivity.

The two principal known methods are the following: direct nitriding method of metallic aluminium powder at high temperature, in an atmosphere of nitrogen or ammonia gas and milling the resulting nitride; the second method uses an alumina reducing method by firing alumina and carbon powder in nitrogen or ammonia gas and pulverizing the resulting nitride.

The disadvantage of the first method is that the resulting nitride can contain a large amount of impurities such as metallic aluminium or other metallic compounds as impurities. Generally these impurities can come from the input raw powder and also from the pulverizing step.

By using the second method there is always present a large amount of oxygen, generally from 2 to 5% by weight or more. The oxygen is present as unreacted alumina or other metallic oxides.

It is known that the presence of these impurities drastically affects the final properties of the sintered aluminium nitride body, particularly the thermal conductiviy decreases to such extent that sintered aluminium nitride cannot be used as a substrate in most electronic applications.

There are known in the art various sintering cycles that involve the temperature of sintering, the rate of reaching said temperature (ramp temperature), and the rate of cooling after sintering. According to the prior art, whichever cycle is used in the sintering, the results of the sintered bodies depend upon the properties of the start AlN powder.

It is also known from US patent no. US-A-4,618,592 to prepare aluminium nitride having high purity by using an alumina reducing method without using the pulverizing step, so to obtain sintered bodies with high density and high thermal conductivity. According to this reference it is essential that the aluminium nitride powder possess an average particle diameter of not more than 2 microns and contain at most 1.5% by weight of bound oxygen, at most 0.5% by weight calculated as metal of metals or metal compounds as impurities or at most 0.5% by weight calculated as carbon or as silicon deriving from carbon or silicon as such or their compounds, wherein at most 0.1% by weight calculated as metal or metal compounds derives from compounds of iron, chromium, etc.

According to this reference it is not possible to obtain good results as regards the thermal conductivity and the other properties without using aluminium nitride having the high purity mentioned above.

It has unexpectedly been found that it is possible to obtain aluminium nitride sintered bodies having a thermal conductivity similar to that or even increased with respect to that obtained in US patent no. US-A-4,618,592 without using an aluminium nitride powder having a high purity as defined in that patent by using a particular sintering cycle as defined below.

In addition, the present inventors have found that it is possible to increase the thermal conductivity of the sintered bodies obtained by starting with pure aluminium nitride powder, for example that in the above mentioned patent, and by using a particular sintering process combined with the specific sintering cycle of the present invention.

The present invention provides a process for preparing sintered aluminium nitride bodies, comprising: starting with an aluminium nitride powder having the following characteristics: surface are not less than 2.5 m$^2$/g; comprising at least 95% by weight of aluminium nitride, wherein the bound oxygen content is at most 3% by weight, wherein iron or iron compounds are at most 0.35% by weight calculated on iron content, the other metal or metal compound impurities being at most 0.1% by weight calculated as metal, provided that the total amount of metal or metal compound impurities be at most 0.6% by weight calculated as metal, and containing silicon or carbon or compounds thereof in an amount of at most 0.5% by weight calculated as carbon or silicon, all the amounts being individually or combined; homogeneously mixing the aluminium nitride powder with a sintering aid: compacting the obtained mixture to form a body: subjecting the body to the following sintering cycle: ramp temperature from room temperature to the sintering temperature of at most 250°C/hour; sintering temperature from 1600 to 1900°C for preferably about 3 hours: then, after sintering, cooling the sintered body at a rate of not more than 300°C/hour.

The preferred surface area of the aluminium nitride starting powder ranges fro 4 to 7 m$^2$/g; the oxygen content in said powder preferably is at most 2.5% by weight: the amount of iron or iron compounds is preferably at most 0.1% by weight; the amount of carbon or carbon compounds is preferably at most 0.15% by weight, and the amount of silicon or silicon compounds is preferably at most 0.1% by weight.

The preferred sintering temperature ranges from 1770 to 1850°C, more preferably from 1810 to 1830°C; the ramp temperature is preferably from 100 to 200°C/hour, more preferably from 120 to 150°C/hour; the cooling rate is preferably from 225 to 275°C/hour.

The aluminium nitride powder which can be used as starting material can be obtained according to the processes known in the art by starting from aluminium or alumina.

There can be cited for example US patent no. US-A-3,108,887 for the method which starts from metallic aluminium and GP patent no. GB-A-1,100,865 for the method which starts from alumina.

As useful aluminium nitride starting materials can be cited those commercially available and sold for example by Starck, Denka, and Toshiba.

As sintering aids can be used those known in the art, for example oxides or fluorides of metals selected from the group of yttrium, the rare earth metals (lanthanum, cerium, praseodymium, neodymium, samarium, gadolinium, dysprosium, etc.) the alkaline earth metals (Ca, Sr, Ba), and preferably oxides or nitrates of yttrium or calcium. These sintering aids are described for example in European patent application nos. EP-A-153,737 and EP-A-166,073 and in US patent no. US-A-3,108,887. The amounts of the sintering aids which can be used are preferably from 0.05 to 10% by weight, more preferably from 0.5 to 3.0% by weight. The sintering aids have generally a surface area comprised preferably from 6.0 to 8.0 m²/g. The homogeneous mixing of the aluminium nitride and of the sintering aid can be carried out, for example, by using conventional dry and wet ball milling.

In general this is achieved by using a grinding aid, for example glycerol trioleate, Menhaden fish oil, or others.

Some organic binders may be used during processing of the ceramic powder. The binders are well known in the art, for example there can be used an organic material of high molecular weight which is soluble in organic solvents, for example industrial waxes, such as paraffin, ceresine, ozokerite or highly viscous polyglycols, PMMA or PVA.

It is known that these binders have bonding and lubricating properties which, under forming pressure, allow the grains of material to glide on each other into the relative positions which produce a highly compact body.

Such binders can also be mixed with suitable plasticizers, which are organic substances well known in the art used to improve the flexibility and reduce the viscosity of the binders. For example, the plasticizers commonly used with polyvinylbutyral are phthalates, phosphates, polyethyleneglycol ethers, glycerol monooleate, petroleum, ricinoleate, sebacates, citrates, and castor oils, while those used for polyvinyl formal comprise dibenzoate, chlorinated naphthalenes, furfuryl oleate, and glycollate adipate.

Conventional and non-conventional agglomeration processes are carried out to formulate the body. Spray drying is an example. Solvent spray drying is well known in the art, in which the solvent is for example acetone. The formed bodies are obtained by conventional compaction methods, for example wet isostatic pressing and dry pressing. Other useful forming methods are tape casting, extrusion, injection molding, etc.

The sintering is carried out by using a closed graphite boat or other well known containers used in aluminium nitride sintering. The sintering is carried out in an inert atmosphere, for example nitrogen or argon in static conditions. This can be carried out under 2-3 psig. A further effect of the invention is that by using the sintering cycle described above with sintering aids having high surface area, it is possible to further increase the thermal conductivity as well as the good physical properties such as colour, sintered density and mechanical strength.

The density of the sintered aluminium nitride ceramic is very high and it can reach values greater than 98% of the theoretical density.

For the sintering aid it is preferred that the ratio of surface area of the sintering aid to that of aluminium nitride powder is from 2:1 to 4:1, more preferably 2.9:1.

A further effect of the present invention is that, by using as a firing boat an aluminium nitride boat, it is possible to further increase the thermal conductivity. According to this invention, for boat it is meant any container used for sintering, e.g. saggers.

A boat of graphite coated with aluminium nitride can also be used in order to prevent any diffusion of impurities into the body to be sintered. Boats of other high purity materials such as boron nitride, aluminium oxide, etc. can be also used for this process. Generally the boat used is closed with a lid made of the same substances indicated above.

A further effect of the present invention is that the thermal conductivity can be further increased by using a greater amount of inert gas during sintering.

For obtaining these dynamic conditions an inert gas flow of 2-3 s.c.f.h. at 10-20 psig can be used, more preferably at 10-12 psig. It is particularly preferred to use for the sintering cycle a firing container made of aluminium nitride, and to use a flow of inert gase from 2 to 3 s.c.f.h. at from 10 to 12 psig.

The best mode of carrying out the invention is to combine all the conditions indicated above: the sintering cycle, high surface area sintering aid, aluminium nitride boat and dynamic conditions of inert gas while sintering.

By using the combination of these best conditions the inventors have found that it is also possible to increase the thermal conductivity of the sintered ceramic obtained from very pure aluminium nitride powder, such as for example powder described in US patent no. US-A-4,618,592 cited above, particularly the powder sold by Tokuyama Soda.

The surface area is measured by conventional B.E.T. absorption methods. Generally with the above surface area the average agglomerate diameter of the aluminium nitride powder ranges from 1 to 5 microns. However, the actual crystal diameter is much smaller as is commonly known in the art.

The AlN powder, as bought, e.g. from Starck, or other available commercial powders or produced by different or similar methods, is dry screened as received and/or after milling, in general with a 35 mesh for removing the metallic Al or other large debris or impurities.

This process of screening is completely described in a copending application filed concurrently herewith, claiming priority from US patent application no. 004951.

The AlN powder used as a starting material can also be obtained by mixing of various AlN commercial powders or prepared in similar or different ways as described in a copending application filed concurrently herewith, claiming priority from US patent application no. 005476.

Also in this last application there is described the screening before and/or after milling as in the first application cited above. The disclosures of these two copending applications are incorporated by reference here.

In the ramp temperature these can be used also up to 820°C a flow of oxygen and/or air and then a flow of inert gas, e.g. nitrogen as mentioned above, in order to remove the carbon deriving from the binder, or plasticizer and solvent used for spray drying.

This process is well described in a copending application filed concurrently herewith, claiming priority from US patent application no. 004952. The disclosure of this copending application above is also incorporated by reference here.

The invention will be further described with reference to the following illustrative examples.

COMPARATIVE EXAMPLE 1

There were used the following starting powders. Starck Grade C Aluminium Nitride Powder, having the following composition by weight.

| | |
|---|---|
| Al | 64.60 |
| N | 31.40 |
| O | 1.59 |
| C | 0.118 |
| Y | 0.0020 |
| S | 0.0022 |
| Fe | 0.0051 |
| Ni | 0.0026 |
| Na | 0.0010 |
| Si | 0.0010 |
| Co | 0.0110 |

(N was measured by the KJELDAHL method, O and C were measured by IR spectroscopy of the sample decomposition gases and metals, and the others were determined by ICP technique (Intercoupled Plasma):
Surface area 6.4 m²/g
45 kg of powder was dry screened with a 35 mesh stainless steel sieve to remove metallic Al and other large debris or impurities.

The AlN powder was combined with 2% by weight $Y_2O_3$ as a sintering acid (Union Molycorp 99% yttrium oxide, having surface area 8.2 m²/gm) and 1% by weight commercially available glycerol trioleate as a grinding aid. This mixture was dry milled 3 hours in a conventional 52 gallon alumina-lined ball mill at 65% of critical speed with 148.6 kg of 85% $Al_2O_3$ rod grinding media 1/2" diameter by 1/2" long.

The bulk and tap densities of the powder before milling were 0.47 and 0.89 gm/cc respectively. The bulk and tap densities of the powder after milling were 0.87 and 1.45 g/cc respectively.

The powder was separated from the grinding media with a 1/8" stainless steel sieve.

Block shapes were formed by a conventional wet bag isostatic press in a 2" x 2" x 1" rubber mould by deairing and pressing to 20,000 psi. The green densities thereby obtained were 1.8 to 2.0 g/cc as calculated from dimensions and weight.

These shapes were sintered by the following profile, according to the prior art.

A vacuum, of 26" Hg was pulled on the furnace and was maintained through heat up to 1300°C. The parts were heated from room temperature to 500°C at 250°C per hour, held at 500°C for 2 hours and from 500°C to 1300°C at 400°C per hour, and held at 1300°C for 2 hours.

At 1300°C, the furnace was backfilled to 2 psig $N_2$ with negligible flow and the parts were heated at 275°C per hour to 1850°C. The $N_2$ pressure was increased to 3 psig with negligible flow at the start of a 3 hour soak at 1850°C. This pressure was maintained throughout the soak and cool down portions of the cycle. The parts were cooled from 1850°C to 1300°C at 275°C/hr, from 1300°C to 1000°C at 150°C per hour, from 1000°C to 500°C at 125°C per hour, and from 500°C to room temperature at 250°C per hour.

The resultant ceramic was dark gray with a light gray crust. The surfaces were machined by conventional ceramic grinding processes to clean up. The specific gravity (d) as measured by the saturated suspended method (ASTM No. C373-72) was 3.267 g/cc.

Samples cut from these shapes were used to measure specific heat and thermal diffusivity by conventional differential scanning calorimetry and conventional laser flash respectively. The specific heat Cp was 0.63 Ws/gm°K at 42°C and the thermal diffusivity $\alpha$ was 0.199 cm²/sec. The calculated thermal conductivity $\lambda$, calculated by using the formula,

$\lambda = Cp . \alpha . d . 100$, was found to be 41 W/m°K.

EXAMPLE 2

There was used Denka Grade AP10 Aluminium Nitride Powder, having the following composition (% by weight):

| | |
|---|---|
| Al | 65.20 |
| N | 33.0 |
| O | 1.00 |
| C | 0,060 |
| S | 0.0030 |
| Fe | 0.0270 |
| Ni | 0.0020 |
| Na | 0.0080 |
| Si | 0.0040 |
| Ce | 0.0008 |
| Cu | 0.0008 |

Surface Area of 4.87 m²/g

3 kg of AlN powder was combined with 2% by weight $Y_2O_3$ as a sintering aid (Union Molycorp 99% yttrium oxide, surface area 14.2 m²/g, a higher surface area than example 1 [comparative]) and with 1% by weight glycerol trioleate as a grinding aid. This mixture was dry milled for 2 to 3 hours at 65% of critical speed in a 20 litre polyethylene container with 15 kg of $Al_2O_3$ grinding media as in Example 1 (comparative), in order to achieve a tap density in the range of from 1.2 to 1.4 g/cc.

The powder was separated from the grinding media with a 1/8" polypropylene sieve.

Block shapes were formed as in Example 1.

The shapes were sintered in an Astro Industries graphite resistance element furnace surrounded by a graphite shield at 75°C per hour to 1800°C, then increased to 1840°C in 2 hours as cycle of ramp temperature, and held at 1840°C for 4-5 hours (as sintering temperature), and then cooled to room temperature at 250°C/hour. A negligible flow of nitrogen was maintained throughout the test.

The resultant ceramic was dark gray. The ceramic was machined as in Example 1. The specific gravity was 3.262 g/cc.

Thermal diffusivity was again measured on samples as in Example 1 and a value of 0.501 cm²/sec was obtained: thermal conductivity of 103 W/m.K was then calculated according to the formula in Example 1.

EXAMPLE 3

Denka Grade AP10 Aluminium Nitride Powder, having the following chemical analysis (% by weight).

| | |
|---|---|
| Al | 63.30 |
| N | 33.30 |
| O | 1.30 |
| C | 0.100 |
| Y | 0.0010 |
| S | 0.0130 |
| Fe | 0.0140 |
| Ni | 0.0020 |
| Na | 0.0500 |
| Si | 0.5000 |
| Co | 0.0020 |

Surface Area 4.9 m²/g, and Union Molycorp yttrium oxide as in Example 2, were used as starting materials.

The powder was prepared in the same manner as in Example 2, except that the dry milled powder was subsequently mixed with 2% by weight polyvinyl butyral (Monsanto Butvar grade B-76) as binder, 2% by weight 2-ethylhexyl diphenyl phosphate (Monsanto Santicizer grade S141) as plasticizer, and 65% by weight acetone (weight % on a powder basis) as solvent in a Cowles dissolver and then spray dried in a conventional closed cycle, $N_2$ atmosphere solvent spray dryer with rotary atomization at 16000 rpm.

The resultant powder had a tap density of 1.13 g/cc and an agglomerate size of 90% less than 88.2 microns, 50% less than 37.7 microns, and 10.0% less than 15.0 microns.

The powder was uniaxially cold-pressed in a conventional dry press to 2.2-2.4 gm/cc green density as calculated from dimensions and weight using a 0.457" diameter carbide die and punch set.

The product was close packed inside a closed graphite boat and sintered in the graphite resistance element furnace at 125°C per hour to 500°C in ambient air at which time a vacuum was pulled to 28 in Hg followed by the introduction of a nitrogen atmosphere. The nitrogen atmosphere was maintained at 12 psig with negligible flow throughout the remainder of the cycle. Heating was continued at 150°C per hour to 1825°C at which temperature it was held for 5.5 hours and then cooled at 260°C per hour to room temperature.

The resultant ceramic was dark gray. Machining was not required. The specific gravity was 3.221 gm/cc. The thermal diffusivity as measured by conventional laser flash was 0.592 cm²/sec; a thermal conductivity of 120 W/m°K was then calculated according to the formula given in Example 1.

EXAMPLE 4

Starck Grade C Aluminium Nitride Powder and Union Molycorp yttrium oxide as in Example 1 were used as starting materials.

The powder was prepared in the same manner as in Example 2 except that the dry milled powder was subsequently mixed with 2 wt % B76 Butvar, 1/4 wt % Santicizer S141, and 68 wt % acetone (wt % on a powder basis) in a Cowles Dissolver and then spray dried as in Example 3 except with nozzle atomization.

The resultant powder had a tap density of 0.920 g/cc and an agglomerate size of 90% less than 165 microns, 50% less than 102 microns, and 10% less than 50.5 microns.

The powder was uniaxially cold pressed as in Example 3.

The product was close packed in a semi-closed aluminium nitride sagger and then sintered in a graphite resistance element furnace at 125°C per hour to 500°C in ambient air after which a vacuum was pulled to 28 in Hg and a nitrogen atmosphere was then maintained at 12 psig and negligible flow throughout the remainder of the sintering process. Heating was continued at 145°C per hour to 1800°C followed by a hold for 5.5 hours and then a cool down to room temperature at 260°C per hour.

The resultant ceramic was dark gray. Machining was not required. The specific gravity was 3.263 g/cc. Chemical analyis gave 64.75 wt % Al, 31.2 wt % N, 1.46 wt % O, 0.39 wt % C, 0.35 wt % Fe, and 1.74 wt % Y. The thermal diffusivity measured as in Example 3 was 0.452 cm²/sec: a thermal conductivity of 93 W/m°K was then calculated according to the formula given in Example 1.

EXAMPLE 5

The powder used in this example was the same as in Example 3 except that the rotary atomization speed on the spray dryer was changed to 10,000 rpm. Tap density of the spray dried powder was 1.18 g/cc. The agglomerate size distribution was 90% less than 133 microns, 50% less than 71.4 microns, and 10% less than 28.9 microns.

Parts were again formed by conventional dry pressing using a carbide tool the same as in Example 4. The green density of the parts was ranging from 2.3 to 2.4 g/cc.

The parts were sintered in a graphite resistance element furnace inside a closed AlN sagger. The parts were heated in ambient air to 500°C at a rate of 100°C/hour. At 500°C vacuum was pulled to 28" Hg and the furnace was back-filled to 2 psig N$_2$. The parts were then heated from 500 to 1820°C at a rate of 145°C/hour. While heating from 500 to 1000°C, the N$_2$ pressure was maintained at 2 psig with negligible flow.

At 1000°C the N$_2$ pressure was increased to 10psig and the flow was increased to 2.4 s.c.f.h. These conditions were held constant through the remaining heat up time, the soak (sintering temperature) and the cool down. The parts were cooled at a rate of 260°C/hour.

The resulting ceramic was light gray in colour. The specific gravity measured by the saturated suspended method was 3.28 g/cc. Thermal diffusivity was measured the same as in Example 3 and was 0.721 cm$^2$/s. The specific heat as measured by differential screening calorimetry was measured on samples manufactured in accordance with the above examples and found to have improved to 0.739 cm$^2$/sec. A thermal conductivity of 175 W/m°K was then calculated according to the formula given in Example 1.

EXAMPLE 6

Tokuyama Soda Type G Aluminium Nitride Powder, having the following composition (% by weight).

| | |
|---|---|
| Al | 65.50 |
| N | 33.40 |
| O | 1.35 |
| C | 0.090 |
| Y | <.001 |
| Si | <.002 |
| Fe | <.001 |
| Ni | <.001 |
| Si | 0.010 |
| Ce | <.001 |
| Cu | <.001: |

Surface Area 2.7 m$^2$gm: and Union Molycorp yttrium oxide the same as in Example 2 were used as starting compounds.

75 gm of AlN was dry mixed with 2 wt% Y$_2$O$_3$ by tumbling for 10 minutes in a pint-sized polyethylene plastic jar at 50 rpm. This mixture was then dry milled at 50 rpm in a similar plastic jar with 225 gm of Al$_2$O$_3$ media as in Example 2. This powder was then mixed with 2 wt % Butvar B76, 1/4 wt % Santicizer S141, and 80 wt % acetone (wt % on a powder basis), and wet milled at 50 pm in a similar plastic container.

The resultant homogeneous mixture was dried in ambient air, crushed with a mortar and pestle, and screened to pass a 35 mesh stainless steel sieve.

The powder was uniaxially cold pressed to 20,000 psi in a 1.125" diameter carbide punch and die set on a conventional press. The resultant average density of the green bodies was 1.929 gm/cc as calculated from dimensions and weight.

These shapes were close packed in a graphite sagger with a lid as in Example 3 and sintered in a graphite resistance element furnace as in Example 5.

The resultant ceramic was light gray in colour. Samples were machined by conventional ceramic grinding processes. The specific gravity was 3.285 gm/cc. Chemical analysis gave 65.50 wt % Al, 33.10 wt % N, 0.007% wt % Fe, 1.17 wt % Y, and 0.081 wt % Si. The thermal diffusivity was 0.762 cm$^2$/sec: a thermal conductivity of 185 w/m°K was then calculated according to the formula given in Example 1.

**Claims**

1. A process for preparing a sintered aluminium nitride body, characterised by comprising: starting with an aluminium nitride powder having the following characteristics: surface area not less than 2.5 m$^2$/g: comprising at least 95% by weight of aluminium nitride, wherein the board oxygen content is at most 3% by weight, wherein iron or iron compounds are at most 0.35% by weight calculated as iron, the other metal or metal compound impurities being at most 0.1% by weight calculated as metal, provided that the total amount of metal or metal compound impurities be at most 0.6% by weight calculated as metal, and containing silicon or carbon or compounds thereof in an amount of at most 0.5% by weight calculated as C or Si: all the amounts being individually or combined: homogeneously mixing the aluminium nitride powder with a sintering aid: compacting the obtained mixture to form a body: subjecting the body to the following sintering cycle:
ramp temperature from room temperature to the sintering temperature of at most 250°C/hour:
sintering temperature from 1600° to 1900°C for about at least 3 hours:
then, after sintering, cooling the sintered body at a rate of not more than 300°C/hour.

2. A process as claimed in claim 1, characterised in that the aluminium nitride powder surface area is from 4 to 7 m$^2$/g.

3. A process as claimed in claim 1 or 2, characterised in that the oxygen content in the aluminium nitride powder is at most 2.5% by weight.

4. A process as claimed in any of claims 1 to 3, characterised in that the amount of iron or iron compounds in the aluminium nitride powder is at most 0.1% by weight calculated as iron.

5. A process as claimed in any of claims 1 to 4, characterised in that the amount of carbon or carbon compounds in the aluminium nitride powder is at most 0.15% by weight calculated as carbon.

6. A process as claimed in any of claims 1 to 5, characterised in that the amount of silicon or silicon compounds in the aluminium nitride powder is at most 0.1% by weight calculated as silicon.

7. A process as claimed in any of claims 1 to 6, characterised in that the sintering temperature is from 1770 to 1850°C, preferably from 1810 to 1830°C.

8. A process as claimed in any of claims 1 to 7, characterised in that the ramp temperature is from 100 to 200°C/hour, preferably from 120 to 150°C/hour.

9. A process as claimed in any of claims 1 to 8, characterised in that the cooling rate is from 225 to 275°C/hour.

A process as claimed in any of claims 1 to 9, characterised in that the sintering aid is yttrium oxide.

11. A process as claimed in any of claims 1 to 10, characterised in that the ratio of surface area of the sintering aid to that of aluminium nitride powder is from 2:1 to 4:1.

12. A process as claimed in any of claims 1 to 11, characterised in that for the sintering cycle a firing container of aluminium nitride is used.

13. A process as claimed in many of claims 1 to 12, characterised in that during the sintering cycle a flow of inert gas from 2 to 3 s.c.f.h. at from 10 to 12 psig is used.

14. A process as claimed in any of claims 1 to 13, characterised in that after the homogeneous mixing of AlN with the sintering aid a binder is added in the presence of a solvent and then the powder is dried.

15. A process is claimed in claim 14, characterised by further utilizing a plasticizer.

16. A process as claimed in claim 14 or 15, characterised in that during the ramp temperature a flow of oxygen is used until at most 820°C, and then a nitrogen flow is used for the sintering cycle.

17. Sintered aluminium nitride bodies prepared according to any preceding claim.